# EUROPEAN PATENT SPECIFICATION

(11) **EP 2 779 765 B1**
(45) Date of publication and mention of the grant of the patent: **29.05.2019**
(21) Application number: 12857891.1
(22) Date of filing: 14.12.2012
(51) Int. Cl.: H04W 72/00, H04W 72/04, H04B 7/024, H04L 5/00, H04B 7/02

(54) **METHOD AND BASE STATION FOR TRANSMITTING SIGNAL**
VERFAHREN UND BASISSTATION ZUM SENDEN VON SIGNALEN
PROCÉDÉ ET STATION DE BASE POUR TRANSMETTRE UN SIGNAL

(30) Priority: 14.12.2011 CN 201110418268
(43) Date of publication of application: 17.09.2014
(73) Proprietor: Huawei Technologies Co., Ltd., Longgang District Shenzhen, Guangdong 518129 (CN)
(72) Inventor: GUAN, Lu, Shenzhen Guangdong 518129 (CN); SUN, Ke, Shenzhen Guangdong 518129 (CN)
(74) Representative: Pfenning, Meinig & Partner mbB
(86) International application number: PCT/CN2012/086653
(87) International publication number: WO 2013/087024

(56) References cited:
- WO-A1-2012/094635
- CN-A- 101 931 485
- CN-A- 102 355 292
- US-A1- 2011 077 038
- US-A1- 2011 077 038
- US-A1- 2011 077 038
- LG ELECTRONICS: "DCI Format for DL-MIMO in Rel-10", 3GPP DRAFT; R1-105659_DCI_FOR_TM9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 6 October 2010 (2010-10-06), XP050450767, [retrieved on 2010-10-06]
- "3GPP TS 36.211", EVOLVED UNIVERSAL TERRESTRIAL RADIO ACCESS (E-UTRA); PHYSICAL CHANNELS AND MODULATION' 3GPP TS 36.211, vol. 0, 22 June 2011 (2011-06-22), XP055131189,
- ZTE: "Evaluation on necessity of DMRS enhancement under CoMP scenarios", 3GPP DRAFT; R1-113014_COMP_DMRS_ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538197, [retrieved on 2011-10-04]
- ZTE: "Consideration on specification impact of CoMP", 3GPP DRAFT; R1-112259, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537416, [retrieved on 2011-08-16]

## Description

### TECHNICAL FIELD

The present invention relate to the field of communications, and in particular, to a method and base station for transmitting a signal.

### BACKGROUND

In an existing communication system, a user equipment (UE, User Equipment) at cell edges receives interference from neighboring cells, and interference power is approximately equivalent to signal power, resulting in a low received signal-to-noise ratio of the edge UE and poor edge throughput performance.

A CoMP (Coordinated Multi-Point) JT (Joint Transmission, Joint Transmission) solution may be used as an effective method for suppressing interference at cell edges. That is to say, by collaboration of multiple cells, a cell, which originally transmits an interference signal to an edge UE, transmits a desired signal, thereby reducing interference power received by the UE and improving signal power.

At present, CoMP JT is implemented by using a CoMP JT global beamforming (Beamforming, BF) solution and a CoMP JT local BF solution. In the global BF solution, a base station, after performing uplink channel estimation, performs downlink BF by using channel reciprocity. When no transmit antenna calibration is performed between RRUs (Radio Remote Unit, radio remote unit) of different cells, distortion exists in a channel for performing downlink BF when compared with a real channel, which may affect performance of global BF. In the local BF solution, when no transmit antenna calibration is performed between RRUs, the same transmit signals are superposed in an out-of-phase manner, and the signal-to-noise ratio is reduced. However, because a transmit antenna calibration technology is immature, the performance of the above solutions applied in CoMP JT is degraded.

US 2011/077038 A1 discloses a method for generating a shared initialization code for physical channel data scrambling in an LTE Advanced coordinated multipoint (CoMP) transmission network, wherein all the cells involved in the DL-CoMP operation is provided to use the cell ID of a pre-designated server cell N_{ID}^{ServingCell} to generate a initialization code cᵢₙᵢₜ.

LG Electronics: "DCI Format for DL-MIMO in Rel-10" (3GPP Draft; R1-105659_DCI_FOR_TM9) teaches several details of DCI format design for TM-9, like e.g. joint encoding of rank, DM-RS port indicator and SCID, in order to minimize control signalling bits. In addition, examples of jointly encoded bit for transmission layers up to 2, 4 and 8 are listed.

### SUMMARY

Embodiments of the present invention provide a method and base station for transmitting a signal according to independent claims, which require no transmit antenna calibration between RRUs of different cells, thereby avoiding the impact of transmit antenna calibration on CoMP JT performance.

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

In one aspect, a method for transmitting a signal is provided, including: generating n pieces of coordination information respectively corresponding to n coordinated base stations, where each piece of coordination information includes a cell identity (CELL Identity, CELL ID)of a serving base station, a scrambling identity (Scrambling Identity, SCID)of a UE, and information about a port number used by a corresponding coordinated base station, and the port number used by the coordinated base station is different from a port number used by the serving base station, and n is a positive integer; and respectively sending the n pieces of coordination information to the n coordinated base stations; calculating a weight value of the serving base station according to a channel matrix of the serving base station; generating a UE-specific reference signal sequence according to the CELL ID and the SCID; weighting the UE-specific reference signal sequence according to the weight value to generate a weighted UE-specific reference signal of the serving base station; and transmitting the UE-specific reference signal to the UE by using a port corresponding to the port number used by the serving base station.

In another aspect, a method for transmitting a signal is provided, including: receiving coordination information from a serving base station, where the coordination information includes a CELL ID of the serving base station, a SCID of a UE, and information about a port number used by a coordinated base station, and the port number used by the coordinated base station is different from a port number used by the serving base station; and transmitting a UE-specific reference signal to the UE according to the coordination information, wherein the transmitting a UE-specific reference signal to the UE according to the coordination information comprises: calculating a weight value of the coordinated base station according to a channel matrix of the coordinated base station; generating a UE-specific reference signal sequence according to the CELL ID and the SCID; weighting the UE-specific reference signal sequence according to the weight value to generate the UE-specific reference signal of the coordinated base station; and transmitting the UE-specific reference signal to the UE by using a port corresponding to the port number used by the coordinated base station.

In another aspect, a base station for transmitting a signal is provided, including: a generating unit, configured to generate n pieces of coordination information respectively corresponding to n coordinated base stations, where each piece of coordination information includes a CELL ID of a serving base station, a SCID of a UE, and information about a port number used by a corresponding coordinated base station, and the port number used by the coordinated base station is different from a port number used by the serving base station, and n is a positive integer; and a sending unit, configured to respectively send the n pieces of coordination information to the n coordinated base stations; and a transmitting unit, wherein: the generating unit is further configured to calculate a weight value of the serving base station according to a channel matrix of the serving base station, generate a UE-specific reference signal sequence according to the CELL ID and the SCID, and weight the UE-specific reference signal sequence according to the weight value to generate a weighted UE-specific reference signal of the serving base station; and the transmitting unit is configured to transmit the UE-specific reference signal to the UE by using a port corresponding to the port number used by the serving base station..

In another aspect, a base station for transmitting a signal is provided, including: a receiving unit, configured to receive coordination information from a serving base station, where the coordination information includes a CELL ID of the serving base station, a SCID of a UE, and information about a port number used by a coordinated base station, and the port number used by the coordinated base station is different from a port number used by the serving base station; and a transmitting unit, configured to transmit a UE-specific reference signal to the UE according to the coordination information; wherein the transmitting unit is specifically configured to: calculate a weight value of the coordinated base station according to a channel matrix of the coordinated base station; generate a UE-specific reference signal sequence according to the CELL ID and the SCID; weight the UE-specific reference signal sequence according to the weight value to generate the UE-specific reference signal of the coordinated base station; and transmit the UE-specific reference signal to the UE by using a port corresponding to the port number used by the coordinated base station.

The embodiments of the present invention, by exchanging coordination information between a serving base station and a coordinated base station, enable the coordinated base station to transmit a signal according to the coordination information of the serving base station, and require no transmit antenna calibration between RRUs of different cells, thereby avoiding the impact of transmit antenna calibration on CoMP JT performance.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a communication system in which embodiments of the present invention may be applied;
FIG. 2 is a schematic flowchart of a method for transmitting a signal according to an embodiment of the present invention;
FIG. 3 is a schematic flowchart of a method for transmitting a signal according to another embodiment of the present invention;
FIG. 4 is a schematic flowchart of a process of transmitting a signal according to an embodiment of the present invention;
FIG. 5 is a block diagram of a base station according to an embodiment of the present invention;
FIG. 6 is a block diagram of a base station according to another embodiment of the present invention; and
FIG. 7 is a block diagram of a base station according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The technical solutions of the present invention may be applied to various communication systems, such as GSM, a code division multiple access (CDMA, Code Division Multiple Access) system, a wideband code division multiple access (WCDMA, Wideband Code Division Multiple Access Wireless) system, a general packet radio service (GPRS, General Packet Radio Service) system, and a long term evolution (LTE, Long Term Evolution) system.

A user equipment (UE, User Equipment), which may also be referred to as a mobile terminal (Mobile Terminal), a mobile user equipment, and the like, may communicate with one or more core networks through a radio access network (for example, RAN, that is, Radio Access Network). The user equipment may be a mobile terminal, such as a mobile phone (or referred to as a "cellular" phone), a computer having a mobile terminal, for example, a portable, pocket-sized, handheld, computer built-in, or vehicle-mounted mobile apparatus, which exchanges language and/or data with a radio access network.

A base station may be a base station (BTS, Base Transceiver Station) in GSM or CDMA, a base station (NodeB) in WCDMA, or an evolved base station (eNB, or e-NodeB, evolutional Node B) in LTE, which is not limited in the present invention.

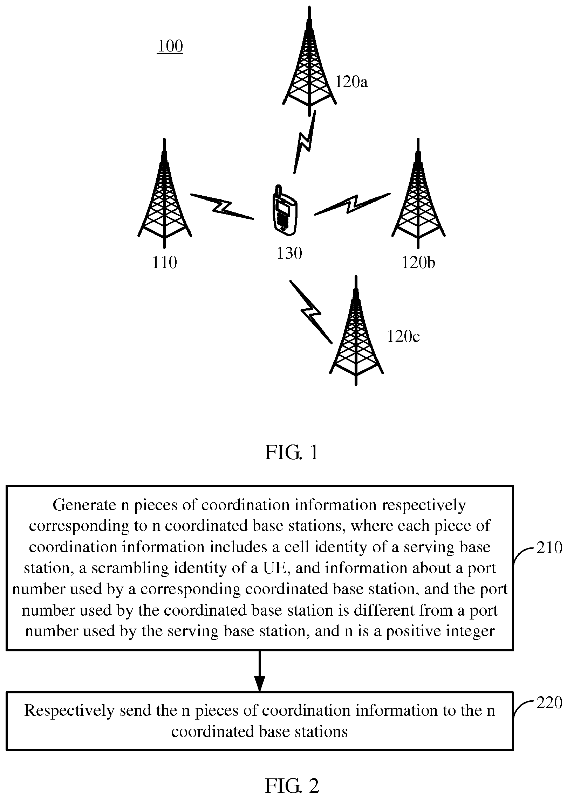

FIG. 1 is a schematic diagram of a communication system in which embodiments of the present invention may be applied.

As shown in FIG. 1, the communication system 100 may include a serving base station 110, a UE 130, and coordinated base stations 120a, 120b, 120c, and so on (hereinafter collectively referred to as a coordinated base station 120).

The serving base station 110 and the coordinated base station 120 may be but are not limited to an eNB in an LTE system. The coordinated base station 120 may be adjacent to the serving base station 110. FIG. 1 shows an example of three coordinated base stations; however, the number of coordinated base stations 120 may be one, two, three, or more, which is not limited in the present invention.

The UE 130 may be various user terminals, such as a mobile phone and a portable computer. The UE 130 is at an edge of a serving cell controlled by the serving base station 110, and is also within a coverage area of the coordinated base station 120. Therefore, the serving base station 110 and the coordinated base station 120 both may transmit a signal to the UE 130, thereby implementing a CoMP solution.

FIG. 2 is a schematic flowchart of a method for transmitting a signal according to an embodiment of the present invention. The method in FIG. 2 is performed by a serving base station, for example, may be performed by the serving base station 110 in the communication system 100 in FIG. 1.

210. Generate n pieces of coordination information respectively corresponding to n coordinated base stations, where each piece of coordination information includes a cell identity (CELL Identity, CELL ID) of a serving base station, a scrambling identity (Scrambling Identity, SCID) of a UE, and information about a port number used by a corresponding coordinated base station, and the port number used by the coordinated base station is different from a port number used by the serving base station, and n is a positive integer.

For example, the information about the port number used by the corresponding coordinated base station may indicate a port number used by a coordinated base station determined by the serving base station. Alternatively, the information about the port number may also indicate the port number used by the serving base station, so that the coordinated base station may select a port number different from the port number used by the serving base station. Alternatively, any other manners that can indicate the port number used by the coordinated base station may also be adopted, which is not limited in the embodiment of the present invention.

220. Respectively send the n pieces of coordination information to the n coordinated base stations.

For example, the serving base station may send the coordination information to the coordinated base stations by using an X2 interface between the base stations, which, however, is not limited in the embodiment of the present invention. The serving base station may also exchange information with the coordinated base stations in other manners. For example, the coordination information may be forwarded by another network element, or the information may be exchanged by using another interface between the base stations.

Optionally, in an embodiment, the serving base station may calculate a weight value of the serving base station according to a channel matrix of the serving base station. The serving base station may generate a UE-specific reference signal (Specific Reference Signal, Specific RS) sequence according to the CELL ID of the serving base station and the SCID of the UE. The serving base station may weight the UE-specific reference signal sequence according to the weight value to generate a weighted UE-specific reference signal of the serving base station. The serving base station may transmit the UE-specific reference signal to the UE by using a port corresponding to the port number used by the serving base station. For example, reference may be made to the prior art for a method for calculating the weight value of the serving base station by the serving base station according to the channel matrix of the serving base station, a method for generating the UE-specific reference signal sequence according to the CELL ID and the SCID, and a method for weighting the

Optionally, in another embodiment, the serving base station may generate (n+1) code words from data to be transmitted to the UE, select n code words from the (n+1) code words, and respectively send the n code words to the n coordinated base stations. The serving base station may transmit one code word in the (n+1) code words except the n code words to the UE according to single-stream beamforming. For example, the serving base station may send the code word to the coordinated base station by using the X2 interface.

Optionally, in another embodiment, in cases where n is equal to 1, a multiple input multiple output (Multiple Input Multiple Output, MIMO) mode is transmission mode (Transmission Mode, TM) 8, as defined in 3GPP TS 36.213 VI0.2.0, the number of transmission layers is 2, the port number used by the serving base station is a, and a port number used by a coordinated base station is b, where a and b are respectively any different elements in a set {7, 8}. Alternatively, in cases where n is equal to 2, a MIMO mode is TM 9, as defined in 3GPP TS 36.213 V10.2.0, the number of transmission layers is 3, the port number used by the serving base station is c, and port numbers used by the n coordinated base stations are respectively d and e, where c, d, and e are respectively any different elements in a set {7, 8, 9, 10}. Alternatively, in cases where n is equal to 3, a MIMO mode is TM 9, the number of transmission layers is 4, the port number used by the serving base station is f, and port numbers used by the n coordinated base stations are respectively g, h, and i, where f, g, h, and i are respectively any different elements in a set {7, 8, 9, 10}. For example, in cases where n is equal to 2, a MIMO mode is TM 9, the number of transmission layers is 3, and port numbers that can be used by a base station may be 7, 8, 9, and 10. For example, when the serving base station uses a port number 7, port numbers used by two coordinated base stations may be any two different port numbers respectively selected from 8, 9, and 10. Alternatively, in cases where n is equal to 3, a MIMO mode is TM 9, the number of transmission layers is 4, and port numbers that can be used by a base station may be 7, 8, 9, and 10. For example, when the serving base station uses a port number 7, port numbers used by three coordinated base stations may be any mutually different port numbers respectively selected from 8, 9, and 10.

The embodiment of the present invention, by exchanging coordination information between a serving base station and a coordinated base station, enables the coordinated base station to transmit a signal according to the coordination information of the serving base station, and requires no transmit antenna calibration between RRUs of different cells, thereby avoiding the impact of transmit antenna calibration on CoMP JT performance.

In addition, the embodiment of the present invention requires no modification to the UE, thereby saving costs.

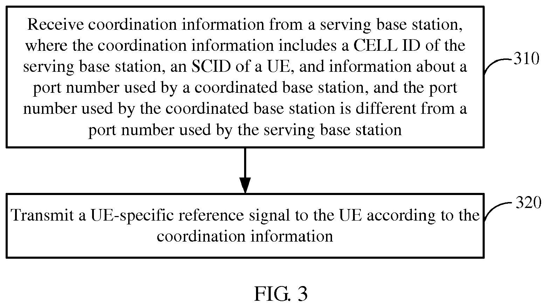

FIG. 3 is a schematic flowchart of a method for transmitting a signal according to another embodiment of the present invention. The method in FIG. 3 is performed by a coordinated

FIG. 3 is a schematic flowchart of a method for transmitting a signal according to another embodiment of the present invention. The method in FIG. 3 is performed by a coordinated base station, for example, may be performed by the coordinated base station 120 in the communication system 100 in FIG. 1.

310. Receive coordination information from a serving base station, where the coordination information includes a CELL ID of the serving base station, an SCID of a UE, and information about a port number used by a coordinated base station, and the port number used by the coordinated base station is different from a port number used by the serving base station.

For example, the information about the port number used by the coordinated base station may indicate a port number used by a coordinated base station determined by the serving base station. Alternatively, the information about the port number may also indicate the port number used by the serving base station, so that the coordinated base station may select a port number different from the port number used by the serving base station. Alternatively, any other manners that can indicate the port number used by the coordinated base station may also be adopted, which is not limited in the embodiment of the present invention.

320. Transmit a UE-specific reference signal to the UE according to the coordination information.

Optionally, in an embodiment, the coordinated base station may calculate a weight value of the coordinated base station according to a channel matrix of the coordinated base station. A UE-specific reference signal sequence is generated according to the CELL ID of the serving base station and the SCID of the UE. The UE-specific reference signal sequence is weighted according to the weight value to generate a UE-specific reference signal of the coordinated base station. The coordinated base station may transmit the UE-specific reference signal to the UE by using a port corresponding to the port number used by the coordinated base station. For example, reference may be made to the prior art for a method for calculating the weight value of the coordinated base station by the coordinated base station according to the channel matrix of the coordinated base station, a method for generating the UE-specific reference signal sequence according to the CELL ID and the SCID, and a method for weighting the UE-specific reference signal sequence according to the weight value to generate the UE-specific reference signal of the coordinated base station, which will not be described herein. However, the coordinated base station generates the UE-specific reference signal sequence according to the CELL ID of the serving base station (instead of a CELL ID of a coordinated base station) and the SCID of the UE. Therefore, the UE-specific reference signal sequence generated by the coordinated base station is the same as a UE-specific reference signal sequence generated by the serving base station.

Optionally, in another embodiment, the coordinated base station may receive a code word from the serving base station, where the code word is one of (n+1) code words generated from data to be transmitted to the UE, and n is a positive integer, and transmit the code word to the UE according to single-stream beamforming.

Optionally, in another embodiment, in cases where n is equal to 1, a MIMO mode is transmission mode TM 8, the number of transmission layers is 2, the port number used by the serving base station is a, and a port number used by a coordinated base station is b, where a and b are respectively any different elements in a set {7, 8}. Alternatively, in cases where n is equal to 2, a MIMO mode is TM 9, the number of transmission layers is 3, the port number used by the serving base station is c, and port numbers used by the n coordinated base stations are respectively d and e, where c, d, and e are respectively any different elements in a set {7, 8, 9, 10}. Alternatively, in cases where n is equal to 3, a MIMO mode is TM 9, the number of transmission layers is 4, the port number used by the serving base station is f, and port numbers used by the n coordinated base stations are respectively g, h, and i, where f, g, h, and i are respectively any different elements in a set {7, 8, 9, 10}. For example, in cases where n is equal to 2, a MIMO mode is TM 9, the number of transmission layers is 3, and port numbers that can be used by a base station may be 7, 8, 9, and 10. For example, when the serving base station uses a port number 7, port numbers used by two coordinated base stations may be any two different port numbers respectively selected from 8, 9 and 10. Alternatively, in cases where n is equal to 3, a MIMO mode is TM 9, the number of transmission layers is 4, and port numbers that can be used by a base station may be 7, 8, 9, and 10. For example, when the serving base station uses a port number 7, port numbers used by three coordinated base stations may be any mutually different port numbers respectively selected from 8, 9 and 10.

The embodiment of the present invention, by exchanging coordination information between a serving base station and a coordinated base station, enables the coordinated base station to transmit a signal according to the coordination information of the serving base station, and requires no transmit antenna calibration between RRUs of different cells, thereby avoiding the impact of transmit antenna calibration on CoMP JT performance.

In addition, the embodiment of the present invention requires no modification to the UE, thereby saving costs.

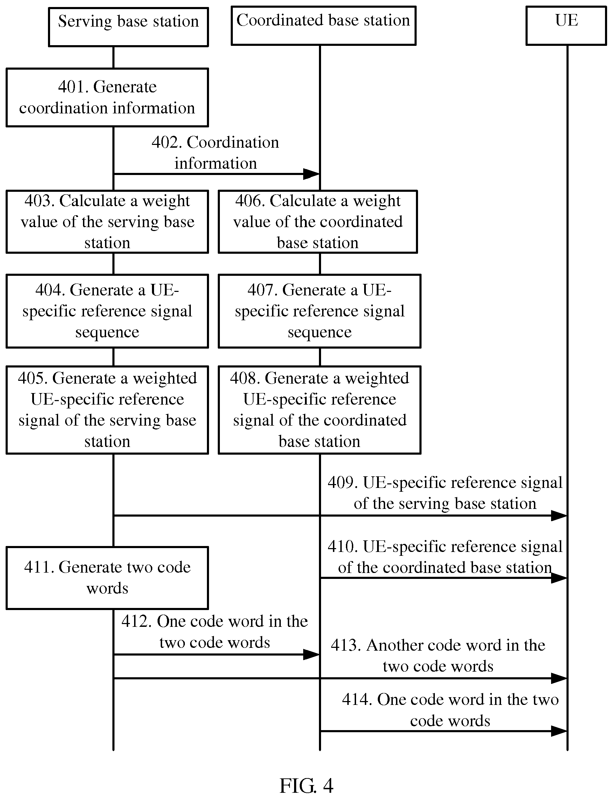

FIG. 4 is a schematic flowchart of a process of transmitting a signal according to an embodiment of the present invention. In FIG. 4, an example that n is equal to 1 is taken for illustration, a MIMO mode is TM 8, the number of transmission layers is 2, and a serving base station coordinate with one coordinated base station to transmit a signal to a UE. For example, the serving base station may be the serving base station 110 in the communication system 100 in FIG. 1, and the coordinated base station may be the coordinated base station 120a, 120b, or 120c in the communication system 100 in FIG. 1.

401. A serving base station generates coordination information, where the coordination information includes a CELL ID of the serving base station, an SCID of a UE, and information about a port number used by a coordinated base station, and the port number used by the coordinated base station is different from a port number used by the serving base station.

For example, the information about the port number used by the coordinated base station may indicate a port number used by a coordinated base station determined by the serving base station. Alternatively, the information about the port number may also indicate the port number used by the serving base station, so that the coordinated base station may select a port number different from the port number used by the serving base station. For example, the MIMO mode is TM 8, the number of transmission layers is 2, and available port numbers are respectively any different elements in a set {7, 8}. In other words, if the port number used by the serving base station is 7, the port number used by the coordinated base station is 8. Alternatively, if the port number used by the serving base station is 8, the port number used by the coordinated base station is 7.

402. The serving base station sends the coordination information generated in step 401 to the coordinated base station.

403. The serving base station calculates a weight value thereof according to a channel matrix of the serving base station.

404. The serving base station generates a UE-specific reference signal sequence according to the CELL ID of the serving base station and the SCID of the UE.

405. The serving base station weights the UE reference signal sequence in step 404 according to the weight value in step 403 to generate a weighted UE-specific reference signal.

406. The coordinated base station calculates a weight value of the coordinated base station according to a channel matrix of the coordinated base station.

407. The coordinated base station generates a UE-specific reference signal sequence according to the CELL ID of the serving base station and the SCID of the UE in the coordination information from the serving base station. The UE-specific reference signal sequence is the same as the UE-specific reference signal sequence generated by the serving base station in step 404.

408. The coordinated base station weights the UE-specific reference signal sequence in step 407 according to the weight value in step 406 to generate a weighted UE-specific reference signal.

409. The serving base station sends the UE-specific reference signal generated by the serving base station to the UE by using a port corresponding to the port number used by the serving base station.

410. The coordinated base station sends the UE-specific reference signal generated by the coordinated base station to the UE by using a port corresponding to the port number used by the coordinated base station in the coordination information.

411. The serving base station generates two code words from data to be transmitted to the UE.

412. The serving base station sends one code word in the two code words generated in step 411 to the coordinated base station.

413. The serving base station sends another code word in the two code words in step 411 to the UE according to single-stream beamforming.

414. The coordinated base station sends the one code word received from the serving base station to the UE according to single-stream beamforming.

It should be understood that, a value of a sequence number of each process does not indicate an execution sequence. The execution sequence of each process should be determined according to functions and inner logic thereof, and should not constitute any limitation to an implementation process of the embodiment of the present invention. For example, steps 403-405 may be performed simultaneously with steps 406-408 or be performed after steps 406-408; step 409 may be performed simultaneously with step 410 or be performed after step 410; and step 413 may be performed simultaneously with step 414 or be performed after step 414.

The embodiment of the present invention, by exchanging coordination information between a serving base station and a coordinated base station, enables the coordinated base station to transmit a signal according to the coordination information of the serving base station, and requires no transmit antenna calibration between RRUs of different cells, thereby avoiding the impact of transmit antenna calibration on CoMP JT performance.

In addition, the embodiment of the present invention requires no modification to the UE, thereby saving costs.

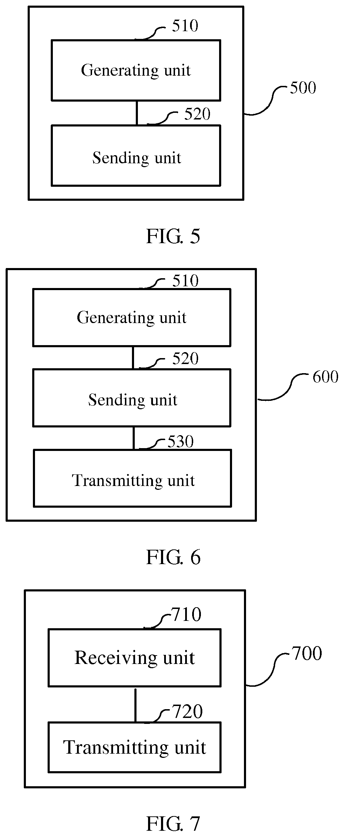

FIG. 5 is a block diagram of a base station according to an embodiment of the present invention. An example of a device 500 in FIG. 5 is a serving base station, which may be, for example, the serving base station 110 in the communication system 100 in FIG. 1. The device 500 includes a generating unit 510 and a sending unit 520.

The generating unit 510 generates n pieces of coordination information respectively corresponding to n coordinated base stations, where each piece of coordination information includes a CELL ID of a serving base station, an SCID of a UE, and information about a port number used by a corresponding coordinated base station, and the port number used by the coordinated base station is different from a port number used by the serving base station, and n is a positive integer. The sending unit 520 respectively sends the n pieces of coordination information to the n coordinated base stations.

The embodiment of the present invention, by exchanging coordination information between a serving base station and a coordinated base station, enables the coordinated base station to transmit a signal according to the coordination information of the serving base station, and requires no transmit antenna calibration between RRUs of different cells, thereby avoiding the impact of transmit antenna calibration on CoMP JT performance.

In addition, the embodiment of the present invention requires no modification to the UE, thereby saving costs.

Reference may be made to a process involving a serving base station in the method embodiments in the above FIG. 2 and FIG. 4 for other functions and operations of the device 500, and will not be described in detail again for avoiding repetition.

Optionally, in an embodiment, in cases where n is equal to 1, a MIMO mode is TM 8, the number of transmission layers is 2, the port number used by the serving base station is a, and a port number used by a coordinated base station is b, where a and b are respectively any different elements in a set {7, 8}. Alternatively, in cases where n is equal to 2, a MIMO mode is TM 9, the number of transmission layers is 3, the port number used by the serving base station is c, and port numbers used by the n coordinated base stations are respectively d and e, where c, d, and e are respectively any different elements in a set {7, 8, 9}. Alternatively, in cases where n is equal to 3, a MIMO mode is TM 9, the number of transmission layers is 4, the port number used by the serving base station is f, and port numbers used by the n coordinated base stations are respectively g, h, and i, where f, g, h, and i are respectively any different elements in a set {7, 8, 9, 10}.

FIG. 6 is a block diagram of a base station according to another embodiment of the present invention. A device 600 in FIG. 6 is different from the device 500 in FIG. 5 in that the device 600 further includes a transmitting unit 530. Detailed descriptions of components which are the same as or similar to those in FIG. 5 will be omitted.

Optionally, in an embodiment, the generating unit 510 may calculate a weight value of a serving base station according to a channel matrix of the serving base station, generate a UE-specific reference signal sequence according to a CELL ID and an SCID, and weight the UE-specific reference signal sequence according to the weight value to generate a weighted UE-specific reference signal of the serving base station. The transmitting unit 530 transmits the UE-specific reference signal to the UE by using a port corresponding to a port number used by the serving base station.

Optionally, in another embodiment, the generating unit 510 may generate (n+1) code words from data to be transmitted to the UE. The sending unit 520 may select n code words from the (n+1) code words, and respectively send the n code words to the n coordinated base stations. The transmitting unit 530 may transmit one code word in the (n+1) code words except the n code words to the UE according to single-stream beamforming.

The embodiment of the present invention, by exchanging coordination information between a serving base station and a coordinated base station, enables the coordinated base station to transmit a signal according to the coordination information of the serving base station, and requires no transmit antenna calibration between RRUs of different cells, thereby avoiding the impact of transmit antenna calibration on CoMP JT performance.

In addition, the embodiment of the present invention requires no modification to the UE, thereby saving costs.

FIG. 7 is a block diagram of a base station according to another embodiment of the present invention. An example of a device 700 in FIG. 7 is a coordinated base station, which may be, for example, the coordinated base station 120 in the communication system 100 in FIG. 1. The device 700 includes a receiving unit 710 and a transmitting unit 720.

The receiving unit 710 receives coordination information from a serving base station, where the coordination information includes a CELL ID of the serving base station, an SCID of a UE, and information about a port number used by a coordinated base station, and the port number used by the coordinated base station is different from a port number used by the serving base station. The transmitting unit 720 transmits a UE-specific reference signal to the UE according to the coordination information.

The embodiment of the present invention, by exchanging coordination information between a serving base station and a coordinated base station, enables the coordinated base station to transmit a signal according to the coordination information of the serving base station, and requires no transmit antenna calibration between RRUs of different cells, thereby avoiding the impact of transmit antenna calibration on CoMP JT performance.

In addition, the embodiment of the present invention requires no modification to the UE, thereby saving costs.

Reference may be made to a process involving a coordinated base station in the method embodiments in the above FIG. 3 and FIG. 4 for other functions and operations of the device 700, and will not be described in detail again for avoiding repetition.

Optionally, in an embodiment, the transmitting unit 720 may calculate a weight value of the coordinated base station according to a channel matrix of the coordinated base station, generate a UE-specific reference signal sequence according to the CELL ID and the SCID, weight the UE-specific reference signal sequence according to the weight value to generate a UE-specific reference signal of the coordinated base station, and transmit the UE-specific reference signal to the UE by using a port corresponding to a port number used by the coordinated base station.

Optionally, in another embodiment, the receiving unit 710 may further receive a code word from the serving base station, where the code word is one of (n+1) code words generated from data to be transmitted to the UE, and n is a positive integer. The transmitting unit 720 may further transmit the code word to the UE according to single-stream beamforming.

Optionally, in another embodiment, in cases where n is equal to 1, a MIMO mode is transmission mode TM 8, the number of transmission layers is 2, the port number used by the serving base station is a, and a port number used by a coordinated base station is b, where a and b are respectively any different elements in a set {7, 8}. Alternatively, in cases where n is equal to 2, a MIMO mode is TM 9, the number of transmission layers is 3, the port number used by the serving base station is c, and port numbers used by n coordinated base stations are respectively d and e, where c, d, and e are respectively any different elements in a set {7, 8, 9}. Alternatively, in cases where n is equal to 3, a MIMO mode is TM 9, the number of transmission layers is 4, the port number used by the serving base station is f, and port numbers used by n coordinated base stations are respectively g, h, and i, where f, g, h, and i are respectively any different elements in a set {7, 8, 9, 10}.

The embodiment of the present invention, by exchanging coordination information between a serving base station and a coordinated base station, enables the coordinated base station to transmit a signal according to the coordination information of the serving base station, and requires no transmit antenna calibration between RRUs of different cells, thereby avoiding the impact of transmit antenna calibration on CoMP JT performance.

In addition, the embodiment of the present invention requires no modification to the UE, thereby saving costs.

Persons of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a specific working process of the foregoing system, apparatus, and unit, reference may be made to the corresponding process in the foregoing method embodiments, and details are not described herein again.

In the several embodiments provided in the present application, it should be understood that, the disclosed system, apparatus, and method may be implemented in other manners. For example, the apparatus embodiment described above is merely exemplary. For example, the unit division is merely logical function division and other division manners may exist in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication and connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or part of the technical solutions may be implemented in the form of a software product. The computer software product is stored in a storage medium, and includes several instructions for instructing a computer device (which may be a personal computer, a server, or a network device, and so on) to perform all or a part of the steps of the methods described in the embodiments of the present invention. The storage medium includes: any medium that can store program codes, such as a USB flash disk, a removable hard disk, a read-only memory (ROM, Read-Only Memory), a random access memory (RAM, Random Access Memory), a magnetic disk, or an optical disk.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for transmitting a signal, comprising:
generating (210) n pieces of coordination information respectively corresponding to n coordinated base stations, wherein each piece of coordination information comprises a cell identity CELL ID of a serving base station, a scrambling identity SCID of a user equipment UE, and information about a port number used by a corresponding coordinated base station, and the port number used by the coordinated base station is different from a port number used by the serving base station, and n is a positive integer;
respectively sending (220) the n pieces of coordination information to the n coordinated base stations;
calculating (403) a weight value of the serving base station according to a channel matrix of the serving base station;
generating (404) a UE-specific reference signal sequence according to the CELL ID and the SCID;
weighting (405) the UE-specific reference signal sequence according to the weight value to generate a weighted UE-specific reference signal of the serving base station; and
transmitting (409) the UE-specific reference signal to the UE by using a port corresponding to the port number used by the serving base station;
generating (n+1) code words (411) from data to be transmitted to the UE, wherein n is equal to 2 or 3;
selecting n code words from the (n+1) code words, and respectively sending (412) the n code words to the n coordinated base stations; and
transmitting (413) one code word in the (n+1) code words except the n code words to the UE according to single-stream beamforming.

2. A method for transmitting a signal, comprising:
receiving (310) coordination information from a serving base station, wherein the coordination information comprises a cell identity CELL ID of the serving base station, a scrambling identity SCID of a user equipment UE, and information about a port number used by a coordinated base station, and the port number used by the coordinated base station is different from a port number used by the serving base station; and
transmitting (320) a UE-specific reference signal to the UE according to the coordination information,
wherein the transmitting a UE-specific reference signal to the UE according to the coordination information comprises:
calculating (406) a weight value of the coordinated base station according to a channel matrix of the coordinated base station;
generating (407) a UE-specific reference signal sequence according to the CELL ID and the SCID;
weighting (408)the UE-specific reference signal sequence according to the weight value to generate the UE-specific reference signal of the coordinated base station; and
transmitting (410) the UE-specific reference signal to the UE by using a port corresponding to the port number used by the coordinated base station;
receiving a code word from the serving base station, wherein the code word is one of (n+1) code words generated from data to be transmitted to the UE, and n is equal to 2 or 3; and
transmitting (414) the code word to the UE according to single-stream beamforming.

3. A base station, comprising:
a generating unit (510), configured to generate n pieces of coordination information respectively corresponding to n coordinated base stations, wherein each piece of coordination information comprises a cell identity CELL ID of a serving base station, a scrambling identity SCID of a user equipment UE, and information about a port number used by a corresponding coordinated base station, and the port number used by the coordinated base station is different from a port number used by the serving base station, and n is a positive integer;
a sending unit (520), configured to respectively send the n pieces of coordination information to the n coordinated base stations; and
a transmitting unit (530), wherein:
the generating unit (510) is further configured to calculate a weight value of the serving base station according to a channel matrix of the serving base station, generate a UE-specific reference signal sequence according to the CELL ID and the SCID, and weight the UE-specific reference signal sequence according to the weight value to generate a weighted UE-specific reference signal of the serving base station; and
the transmitting unit (530) is configured to transmit the UE-specific reference signal to the UE by using a port corresponding to the port number used by the serving base station; and wherein:
the generating unit (510) is further configured to generate (n+1) code words from data to be transmitted to the UE, wherein n is equal to 2 or 3;
the sending unit (520) is further configured to select n code words from the (n+1) code words, and respectively send the n code words to the n coordinated base stations; and
the transmitting unit (530) is configured to transmit one code word in the (n+1) code words except the n code words to the UE according to single-stream beamforming.

4. A base station, comprising:
a receiving unit (710), configured to receive coordination information from a serving base station, wherein the coordination information comprises a cell identity CELL ID of the serving base station, a scrambling identity SCID of a user equipment UE, and information about a port number used by a coordinated base station, and the port number used by the coordinated base station is different from a port number used by the serving base station; and
a transmitting unit (720), configured to transmit a UE-specific reference signal to the UE according to the coordination information,
wherein the transmitting unit (720) is specifically configured to: calculate a weight value of the coordinated base station according to a channel matrix of the coordinated base station; generate a UE-specific reference signal sequence according to the CELL ID and the SCID; weight the UE-specific reference signal sequence according to the weight value to generate the UE-specific reference signal of the coordinated base station; and transmit the UE-specific reference signal to the UE by using a port corresponding to the port number used by the coordinated base station; and wherein: the receiving unit (710) is further configured to receive a code word from the serving base station, wherein the code word is one of (n+1) code words generated from data to be transmitted to the UE, and n is equal to 2 or 3; and
the transmitting unit (720) is further configured to transmit the code word to the UE according to single-stream beamforming.

## Patentansprüche

1. Verfahren zum Übertragen eines Signals, das Folgendes umfasst:
Erzeugen (210) von n Stücken von Koordinationsinformationen, die jeweils n koordinierten Basisstationen entsprechen, wobei jedes Stück von Koordinationsinformationen eine Zellenidentität (CELL ID) einer bedienenden Basisstation, eine Verwürfelungsidentität (SCID) eines Benutzergerätes (UE) und Informationen über eine Portnummer umfasst, die von einer entsprechenden Basisstation verwendet wird, und wobei die von der koordinierten Basisstation verwendete Portnummer von einer Portnummer abweicht, die von der bedienenden Basisstation verwendet wird, und n eine positive Ganzzahl ist;
jeweiliges Senden (220) der n Stücke von Koordinationsinformationen zu den n koordinierten Basisstationen;
Berechnen (403) eines Gewichtungswertes der bedienenden Basisstation gemäß einer Kanalmatrix der bedienenden Basisstation;
Erzeugen (404) einer UE-spezifischen Referenzsignalsequenz gemäß der CELL ID und der SCID;
Gewichten (405) der UE-spezifischen Referenzsignalsequenz gemäß dem Gewichtungswert, um ein gewichtetes UE-spezifisches Referenzsignal der bedienenden Basisstation zu erzeugen; und
Übertragen (409) des UE-spezifischen Referenzsignals zu dem UE unter Verwendung eines Ports, welcher der von der bedienenden Basisstation verwendeten Portnummer entspricht;
Erzeugen von (n+1) Codewörtern (411) von den zu dem UE zu übertragenden Daten, wobei n gleich 2 oder 3 ist;
Auswählen von n Codewörtern von den (n+1) Codewörtern, und jeweiliges Senden (412) der n Codewörter zu den n koordinierten Basisstationen; und
Übertragen (413) von einem Codewort in den (n+1) Codewörtern außer den n Codewörtern gemäß Single-Stream-Strahlformung zu dem UE.

2. Verfahren zum Übertragen eines Signals, das Folgendes umfasst:
Empfangen (310) von Koordinationsinformationen von einer bedienenden Basisstation, wobei die Koordinationsinformationen eine Zellenidentität (CELL ID) der bedienenden Basisstation, eine Verwürfelungsidentität (SCID) eines Benutzergerätes (UE) und Informationen über eine Portnummer umfassen, die von einer entsprechenden Basisstation verwendet wird, und wobei die von der koordinierten Basisstation verwendete Portnummer von einer Portnummer abweicht, die von der bedienenden Basisstation verwendet wird; und
Übertragen (320) eines UE-spezifischen Referenzsignals gemäß den Koordinationsinformationen zu dem UE,
wobei das Übertragen eines UE-spezifischen Referenzsignals zu dem UE gemäß den Koordinationsinformationen Folgendes umfasst:
Berechnen (406) eines Gewichtungswertes der koordinierten Basisstation gemäß einer Kanalmatrix der koordinierten Basisstation;
Erzeugen (407) einer UE-spezifischen Referenzsignalsequenz gemäß der CELL ID und der SCID;
Gewichten (408) der UE-spezifischen Referenzsignalsequenz gemäß dem Gewichtungswert, um das gewichtete UE-spezifische Referenzsignal der bedienenden Basisstation zu erzeugen; und
Übertragen (410) des UE-spezifischen Referenzsignals zu dem UE unter Verwendung eines Ports, welcher der von der koordinierten Basisstation verwendeten Portnummer entspricht;
Empfangen eines Codeworts von der bedienenden Basisstation, wobei das Codewort eines von (n+1) Codewörtern ist, die von den zu dem UE zu übertragenden Daten erzeugt werden, und wobei n gleich 2 oder 3 ist; und
Übertragen (414) des Codeworts zu dem UE gemäß Single-Stream-Strahlformung.

3. Basisstation, die Folgendes umfasst:
eine Erzeugungseinheit (510), die dazu ausgelegt ist, n Stücke von Koordinationsinformationen zu erzeugen, die jeweils n koordinierten Basisstationen entsprechen, wobei jedes Stück von Koordinationsinformationen eine Zellenidentität (CELL ID) einer bedienenden Basisstation, eine Verwürfelungsidentität (SCID) eines Benutzergerätes (UE) und Informationen über eine Portnummer umfasst, die von einer entsprechenden Basisstation verwendet wird, und wobei die von der koordinierten Basisstation verwendete Portnummer von einer Portnummer abweicht, die von der bedienenden Basisstation verwendet wird, und n eine positive Ganzzahl ist;
eine Sendeeinheit (520), die dazu ausgelegt ist, jeweils die n Stücke von Koordinationsinformationen zu den n koordinierten Basisstationen zu senden; und
eine Übertragungseinheit (530), wobei:
die Erzeugungseinheit (510) ferner dazu ausgelegt ist, einen Gewichtungswert der bedienenden Basisstation gemäß einer Kanalmatrix der bedienenden Basisstation zu berechnen, eine UE-spezifische Referenzsignalsequenz gemäß der CELL ID und der SCID zu erzeugen, und die UE-spezifische Referenzsignalsequenz gemäß dem Gewichtungswert zu gewichten, um ein gewichtetes UE-spezifisches Referenzsignal der bedienenden Basisstation zu erzeugen; und
die Übertragungseinheit (530) dazu ausgelegt ist, das UE-spezifische Referenzsignal zu dem UE unter Verwendung eines Ports zu übertragen, welcher der von der bedienenden Basisstation verwendeten Portnummer entspricht; und wobei:
die Erzeugungseinheit (510) ferner dazu ausgelegt ist, (n+1) Codewörter von den zu dem UE zu übertragenden Daten zu erzeugen, wobei n gleich 2 oder 3 ist;
die Sendeeinheit (520) ferner dazu ausgelegt ist, n Codewörter von den (n+1) Codewörtern auszuwählen und die n Codewörter jeweils zu den n koordinierten Basisstationen zu senden; und
die Übertragungseinheit (530) dazu ausgelegt ist, ein Codewort in den (n+1) Codewörtern außer den n Codewörtern gemäß Single-Stream-Strahlformung zu dem UE zu übertragen.

4. Basisstation, die Folgendes umfasst:
eine Empfangseinheit (710), die dazu ausgelegt ist, Koordinationsinformationen von einer bedienenden Basisstation zu empfangen, wobei die Koordinationsinformationen eine Zellenidentität (CELL ID) der bedienenden Basisstation, eine Verwürfelungsidentität (SCID) eines Benutzergerätes (UE) und
Informationen über eine Portnummer umfassen, die von einer entsprechenden Basisstation verwendet wird, und wobei die von der koordinierten Basisstation verwendete Portnummer von einer Portnummer abweicht, die von der bedienenden Basisstation verwendet wird; und
eine Übertragungseinheit (720), die dazu ausgelegt ist, ein UE-spezifisches Referenzsignal gemäß den Koordinationsinformationen zu dem UE zu übertragen,
wobei die Übertragungseinheit (720) insbesondere für Folgendes ausgelegt ist:
Berechnen eines Gewichtungswertes der koordinierten Basisstation gemäß einer Kanalmatrix der koordinierten Basisstation; Erzeugen einer UE-spezifischen Referenzsignalsequenz gemäß der CELL ID und der SCID; Gewichten der UE-spezifischen Referenzsignalsequenz gemäß dem Gewichtungswert, um das UE-spezifische Referenzsignal der koordinierten Basisstation zu erzeugen; und
Übertragen des UE-spezifischen Referenzsignals zu dem UE unter Verwendung eines Ports, welcher der von der koordinierten Basisstation verwendeten Portnummer entspricht; und wobei die Empfangseinheit (710) ferner dazu ausgelegt ist, ein Codewort von der bedienenden Basisstation zu empfangen, wobei das Codewort eines von (n+1) Codewörtern ist, die von den zu dem UE zu übertragenden Daten erzeugt werden, und n gleich 2 oder 3 ist; und
die Übertragungseinheit (720) ferner dazu ausgelegt ist, das Codewort gemäß Single-Stream-Strahlformung zu dem UE zu übertragen.

## Revendications

1. Procédé pour transmettre un signal consistant :
à générer (210) n éléments d'informations de coordination correspondant respectivement aux n stations de base coordonnées, dans lequel chaque élément d'informations de coordination comporte une identité de cellule (ID CELL) d'une station de base de desserte, une identité de brouillage (SCID) d'un équipement d'utilisateur (UE) et des informations concernant un numéro de port utilisé par une station de base coordonnée correspondante, et le numéro de port utilisé par la station de base coordonnée est différent d'un numéro de port utilisé par la station de base de desserte et n est un nombre entier positif ;
à envoyer respectivement (220) les n éléments d'informations de coordination aux n stations de base coordonnées ;
à calculer (403) une valeur de pondération de la station de base de desserte en fonction d'une matrice de canal de la station de base de desserte ;
à générer (404) une séquence de signaux de référence spécifiques à un équipement utilisateur en fonction de l'identité ID CELL et de l'identité SCID ;
à pondérer (405) la séquence de signaux de référence spécifiques à un équipement utilisateur en fonction de la valeur de pondération pour générer un signal de référence pondéré spécifique à un équipement utilisateur de la station de base de desserte ; et
à transmettre (409) le signal de référence spécifique à un équipement utilisateur à l'équipement utilisateur en utilisant un port correspondant au numéro de port utilisé par la station de base de desserte ;
à générer (n+1) mots codés (411) à partir de données qui doivent être transmises à l'équipement utilisateur, dans lequel n est égal à 2 ou 3 ;
à sélectionner n mots codés parmi les (n+1) mots codés et à envoyer respectivement (412) les n mots codés aux n stations de base coordonnées ; et
à transmettre (413) un mot codé dans les (n+1) mots codés à l'exception des n mots codés à l'équipement utilisateur en fonction d'une formation de faisceaux à flux unique.

2. Procédé pour transmettre un signal consistant :
à recevoir (310) des informations de coordination en provenance d'une station de base de desserte, dans lequel les informations de coordination comportent une identité de cellule (ID CELL) de la station de base de desserte, une identité de brouillage (SCID) d'un équipement d'utilisateur (UE) et des informations concernant un numéro de port utilisé par une station de base coordonnée, et le numéro de port utilisé par la station de base coordonnée est différent d'un numéro de port utilisé par la station de base de desserte ; et
à transmettre (320) un signal de référence spécifique à un équipement utilisateur à l'équipement utilisateur en fonction des informations de coordination,
dans lequel la transmission d'un signal de référence spécifique à un équipement utilisateur à l'équipement utilisateur en fonction des informations de coordination, consiste :
à calculer (406) une valeur de pondération de la station de base coordonnée en fonction d'une matrice de canal de la station de base coordonnée ;
à générer (407) une séquence de signaux de référence spécifiques à un équipement utilisateur en fonction de l'identité ID CELL et de l'identité SCID ;
à pondérer (408) la séquence de signaux de référence spécifiques à un équipement utilisateur en fonction de la valeur de pondération pour générer le signal de référence spécifique à un équipement utilisateur de la station de base coordonnée ; et
à transmettre (410) le signal de référence spécifique à un équipement utilisateur à l'équipement utilisateur en utilisant un port correspondant au numéro de port utilisé par la station de base coordonnée ;
à recevoir un mot codé en provenance de la station de base de desserte, dans lequel le mot codé est l'un des (n+1) mots codés générés à partir de données qui doivent être transmises à l'équipement utilisateur, dans lequel n est égal à 2 ou 3 ; et
à transmettre (414) le mot codé à l'équipement utilisateur en fonction d'une formation de faisceaux à flux unique.

3. Station de base comprenant :
une unité de génération (510), configurée pour générer n éléments d'informations de coordination correspondant respectivement aux n stations de base coordonnées, dans laquelle chaque élément d'informations de coordination comporte une identité de cellule (ID CELL) d'une station de base de desserte, une identité de brouillage (SCID) d'un équipement d'utilisateur (UE) et des informations concernant un numéro de port utilisé par une station de base coordonnée correspondante, et le numéro de port utilisé par la station de base coordonnée est différent d'un numéro de port utilisé par la station de base de desserte et n est un nombre entier positif ;
une unité d'envoi (520), configurée pour envoyer respectivement les n éléments d'informations de coordination aux n stations de base coordonnées ; et
une unité de transmission (530), dans laquelle :
l'unité de génération (510) est en outre configurée pour calculer une valeur de pondération de la station de base de desserte en fonction d'une matrice de canal de la station de base de desserte, pour générer une séquence de signaux de référence spécifiques à un équipement utilisateur en fonction de l'identité ID CELL et de l'identité SCID, et pour pondérer la séquence de signaux de référence spécifiques à un équipement utilisateur en fonction de la valeur de pondération pour générer un signal de référence pondéré spécifique à un équipement utilisateur de la station de base de desserte ; et
l'unité de transmission (530) est configurée pour transmettre le signal de référence spécifique à un équipement utilisateur à l'équipement utilisateur en utilisant un port correspondant au numéro de port utilisé par la station de base de desserte ; et dans laquelle :
l'unité de génération (510) est en outre configurée pour générer (n+1) mots codés à partir de données qui doivent être transmises à l'équipement utilisateur, dans laquelle n est égal à 2 ou 3 ;
l'unité d'envoi (520) est en outre configurée pour sélectionner n mots codés parmi les (n+1) mots codés et pour envoyer respectivement les n mots codés aux n stations de base coordonnées ; et
l'unité de transmission (530) est configurée pour transmettre un mot codé dans les (n+1) mots codés à l'exception des n mots codés à l'équipement utilisateur en fonction d'une formation de faisceaux à flux unique.

4. Station de base comprenant :
une unité de réception (710), configurée pour recevoir des informations de coordination en provenance d'une station de base de desserte, dans laquelle les informations de coordination comportent une identité de cellule (ID CELL) de la station de base de desserte, une identité de brouillage (SCID) d'un équipement d'utilisateur (UE) et des informations concernant un numéro de port utilisé par une station de base coordonnée, et le numéro de port utilisé par la station de base coordonnée est différent d'un numéro de port utilisé par la station de base de desserte ; et
une unité de transmission (720), configurée pour transmettre un signal de référence spécifique à un équipement utilisateur à l'équipement utilisateur en fonction des informations de coordination,
dans laquelle l'unité de transmission (720) est spécialement configurée : pour calculer une valeur de pondération de la station de base coordonnée en fonction d'une matrice de canal de la station de base coordonnée ; pour générer une séquence de signaux de référence spécifiques à un équipement utilisateur en fonction de l'identité ID CELL et de l'identité SCID ; pour pondérer la séquence de signaux de référence spécifiques à un équipement utilisateur en fonction de la valeur de pondération pour générer le signal de référence spécifique à un équipement utilisateur de la station de base coordonnée ; et pour transmettre le signal de référence spécifique à un équipement utilisateur à l'équipement utilisateur en utilisant un port correspondant au numéro de port utilisé par la station de base coordonnée ; et dans laquelle : l'unité de réception (710) est en outre configurée pour recevoir un mot codé en provenance de la station de base de desserte, dans laquelle le mot codé est l'un des (n+1) mots codés générés à partir de données qui doivent être transmises à l'équipement utilisateur, dans laquelle n est égal à 2 ou 3 ; et
l'unité de transmission (720) est en outre configurée pour transmettre le mot codé à l'équipement utilisateur en fonction d'une formation de faisceaux à flux unique.
